# EUROPEAN PATENT APPLICATION

(11) **EP 4 657 645 A1**
(43) Date of publication of application: **03.12.2025**
(21) Application number: 24747076.8
(22) Date of filing: 05.01.2024
(51) Int. Cl.: H01M 50/536, H01G 11/70, H01G 11/74, H01M 10/0587

(54) **SECONDARY BATTERY**

(30) Priority: 23.01.2023 JP 2023008116
(71) Applicant: Panasonic Energy Co., Ltd., Osaka 570-8511 (JP)
(72) Inventor: UEDA, Tomomichi, Kadoma-shi, Osaka 571-0057 (JP); OKIMOTO, Ryota, Kadoma-shi, Osaka 571-0057 (JP)
(74) Representative: Novagraaf International SA
(86) International application number: PCT/JP2024/000058
(87) International publication number: WO 2024/157743

(57) **Abstract**

A disclosed secondary battery 10 includes a first electrode 14b including a first current collector having an elongated sheet shape, a second electrode 14a including a second current collector having an elongated sheet shape, a separator provided between the first electrode 14b and the second electrode 14a, and a first current collector plate 17 welded to the first electrode 14b. The first electrode 14b and the second electrode 14a are wound for 9 or more turns with the separator therebetween to constitute an electrode group 14. An end portion of the first current collector extending in the longitudinal direction thereof protrudes from one of the end surfaces of the electrode group 14. A part of the end portion is welded to the first current collector plate 17, while a region of the end portion that corresponds to inner N turns (N is an integer of 2 or more and 8 or less) is not welded to the first current collector plate 17. In the above configuration, internal short circuits due to charging and discharging can be suppressed.

## Description

### [Technical Field]

The present disclosure relates to a secondary battery.

### [Background Art]

Conventionally, secondary batteries capable of repetitive charging and discharging are known (e.g., Patent Literature 1). The secondary battery of Literature 1 includes a battery case, an electrode group housed in the battery case and including a positive electrode and a negative electrode wound with a separator therebetween, a sealing plate that seals an opening of the battery case, a positive electrode lead that electrically connects the sealing plate and the positive electrode, and a negative electrode current collector that electrically connects the battery case and the negative electrode.

### [Citation List]

### [Patent Literature]

[Patent Literature 1] Japanese Laid-Open Patent Publication No. 2021-82376

### [Summary of Invention]

### [Technical Problem]

In a secondary battery having the above-described configuration, the positive electrode and the negative electrode may be short-circuited (hereinafter, referred to as internal short circuit) in the battery case due to charging and discharging. An example of a process in which an internal short circuit occurs is a process in which one (e.g., the positive electrode) of the electrodes pierces the separator to come into contact with the other electrode during expansion and contraction of the electrode group in association with charging and discharging. In view of such a situation, one of the objects of the present disclosure is to suppress occurrence of internal short circuits caused through charging and discharging.

### [Solution to Problem]

One aspect of the present disclosure relates to a secondary battery. The secondary battery includes: a first electrode including a first current collector having an elongated sheet shape; a second electrode including a second current collector having an elongated sheet shape; a separator provided between the first electrode and the second electrode; and a first current collector plate welded to the first electrode, wherein the first electrode and the second electrode are wound for 9 or more turns with the separator therebetween to constitute an electrode group, an end portion of the first current collector extending in a longitudinal direction thereof protrudes from one of end surfaces of the electrode group, and a part of the end portion is welded to the first current collector plate, while a region of the end portion that corresponds to inner N turns is not welded to the first current collector plate, where N is an integer of 2 or more and 8 or less.

### [Advantageous Effects of Invention]

According to the present disclosure, it is possible to suppress occurrence of internal short circuits caused through charging and discharging.

While the novel features of the invention are set forth particularly in the appended claims, the invention, both as to organization and content, will be better understood and appreciated, along with other objects and features thereof, from the following detailed description taken in conjunction with the drawings.

### [Brief Description of Drawings]

[FIG. 1] FIG. 1 is a schematic cross-sectional view of an example of a secondary battery according to the present disclosure.
[FIG. 2] FIG. 2 is a schematic perspective view of an example of an end surface current collector plate.

### [Description of Embodiments]

Embodiments of a secondary battery according to the present disclosure are described below by way of examples. However, the present disclosure is not limited to the examples described below. In the following description, specific numerical values and materials may be exemplified in some cases, but other numerical values and other materials may be adopted as long as the effects of the present disclosure can be obtained.

The secondary battery according to the present disclosure may be an alkaline storage battery (e.g., a nickel-hydrogen battery or a nickel-cadmium battery), a lithium-ion secondary battery, or a lithium-metal secondary battery, for example. In the present disclosure, the category of the secondary battery also encompasses power storage devices (e.g., a lithium-ion capacitor) in which at least one of a positive electrode and a negative electrode is a polarizable electrode that exhibits capacity by a non-Faraday reaction. The secondary battery according to the present disclosure includes a first electrode, a second electrode, a separator, and a first current collector plate.

The first electrode has a first current collector having an elongated sheet shape (or band shape). The first electrode may include a first active material layer carried on the first current collector. The first electrode may be either a positive electrode or a negative electrode. Here, a lithium-ion secondary battery is described as an example. When the first electrode is a negative electrode, the first current collector is a negative electrode current collector (possibly constituted of a copper foil or a copper alloy foil, for example), and a negative electrode active material layer (possibly containing a carbonaceous material, for example) may be provided as the first active material layer.

The second electrode includes a second current collector having an elongated sheet shape (or a band shape). The second electrode may include a second active material layer carried on the second current collector. The second electrode may be the other of the positive electrode or negative electrode. Here, a lithium-ion secondary battery is described as an example. When the second electrode is a positive electrode, the second current collector is a positive electrode current collector (possibly constituted of an aluminum foil or an aluminum alloy foil, for example), and a positive electrode active material layer (possibly containing a lithium-containing transition metal oxide, for example) is provided as the second active material layer.

The separator is positioned between the first electrode and the second electrode. The separator may have an elongated sheet shape (or a band shape). The separator may be constituted of a porous sheet having ionic permeability and insulating properties. Examples of the porous sheet include thin films having micropores, woven fabrics, and nonwoven fabrics.

The first electrode and the second electrode are wound for 9 or more turns with the separator therebetween to constitute an electrode group. As such, the secondary battery according to the present disclosure includes a wound electrode group. The outer shape of the electrode group may be, for example, cylindrical or prismatic. In the electrode group, the first electrode and the second electrode may be wound for 16 or more turns or 30 or more turns with the separator therebetween. The upper limit of the number of turns is not particularly limited but may be 100 or less or 50 or less, for example.

The first current collector plate is welded to the first electrode. The first current collector plate may be constituted of a metal. Here, an end portion (also referred to below as first end portion) of the first current collector extending in the longitudinal direction thereof protrudes from one of the end surfaces of the electrode group. A part of the first end portion is welded to the first current collector plate, while a region (also referred to below as first region) of the first end portion corresponding to the inner N turns (N is an integer of 2 or more and 8 or less) is not welded to the first current collector plate. Here, the region corresponding to the inner N turns (N is an integer of 1 or more) is defmed as a region from 0° to 360N°, starting from the inner peripheral end of the first end portion as a starting point (or a winding starting point). A region of the first end portion other than the first region may be entirely or partially welded to the first current collector plate.

The present discloser is based on the knowledge that internal short circuits in association with charging and discharging of a secondary battery tend to occur when the innermost area of the first end portion is welded to the first current collector pate. In addition, as described above, it has been found that the occurrence of internal short circuits can be significantly suppressed by not welding the first region of the first end portion to the first current collector plate. This is considered to be because the movement of the first electrode in the first region is not restricted by the first current collector plate, whereby stress in a part of the electrode group that corresponds to the first region during charging and discharging is alleviated, making occurrence of a phenomenon in which either of the electrodes pierces the separator less likely. In particular, the larger the number of turns of the electrode group, the more significant the effect of suppressing occurrence of internal short circuits.

A region of the end portion (first end portion) of the first electrode that corresponds to the inner N turns (N is an integer of 3 or more and 4 or less) may not be welded to the first current collector plate. According to the above configuration, conduction resistance between the first electrode and the first current collector plate can be reduced to a small value while achieving the effect of suppressing internal short circuits during charging and discharging.

According to the present disclosure, occurrence of internal short circuits due to charging and discharging can be suppressed by devising the welding range between the first electrode and the first current collector plate as described above.

Hereinafter, an example of the secondary battery according to the present disclosure will be described in detail with reference to the drawings. The elements of configuration described above are applicable to elements of configuration of the exemplary secondary battery described below. The elements of configuration of the exemplary secondary battery described below can be altered based on the above description. Further, the matters described below may be applied to the above-described embodiment. Among the elements of configuration of the exemplary secondary battery described below, an element of configuration that is not essential to the secondary battery according to the present disclosure may be omitted. It should be noted that the drawings indicated below are schematic and do not accurately reflect the shape or number of actual members.

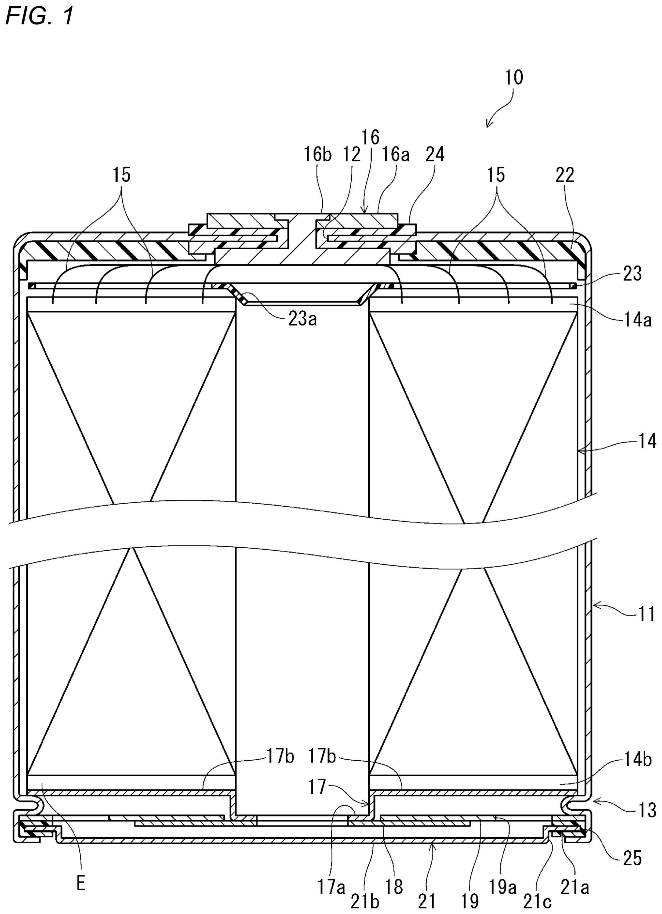

A secondary battery 10 of the present embodiment is a secondary battery capable of repetitive charging and discharging and may be a lithium-ion secondary battery or a lithium secondary battery (lithium-metal secondary battery), for example. As illustrated in FIG. 1, the secondary battery 10 includes a case 11, an electrode group 14, a positive electrode terminal 16, an end surface current collector plate 17, a negative electrode current collector plate 19, and a sealing plate 21.

The case 11 is formed into a bottomed tubular shape (in this example, a bottomed circular cylindrical shape) having an opening at one end (a lower end in FIG. 1). The case 11 is made of a metal. A through hole 12 through which the positive electrode terminal 16 is inserted is formed at the center of the bottom of the case 11. The case 11 houses a non-illustrated liquid electrolyte together with the electrode group 14. In the vicinity of the opening of the case 11, a recess 13 is formed that is recessed radially inward from the case 11.

The electrode group 14 includes a positive electrode 14a and a negative electrode 14b each having an elongated sheet shape. The positive electrode 14a includes an elongated sheet-shaped positive electrode current collector (not illustrated), while the negative electrode (14b) includes an elongated sheet-shaped negative electrode current collector (not illustrated). The electrode group 14 is a wound electrode group in which the positive electrode 14a and the negative electrode 14b are wound for 10 or more turns (in this case, 40 turns) with an elongated sheet-shaped separator (not illustrated) therebetween. The electrode group 14 is substantially cylindrical in shape. A plurality of (in this example, eight) positive electrode tabs 15 composed of conductors are connected to the positive electrode 14a, and the respective positive electrode tabs 15 extend from one (upper end surface in FIG. 1) of the end surfaces of the electrode group 14. The positive electrode 14a is an example of the second electrode, and the negative electrode 14b is an example of the first electrode. The positive electrode current collector is an example of the second current collector, and the negative electrode current collector is an example of the first current collector. The positive electrode tabs 15 are examples of the tabs.

Between the electrode group 14 and the bottom of the case 11, an insulation member 22 for electrically insulating the two is placed. The insulation member 22 is constituted of an insulative resin, for example. The insulation member 22 may be attached to the bottom of the case 11.

The positive electrode terminal 16 is inserted in the through hole 12 at the bottom of the case 11 and passes through the bottom of the case 11. The positive electrode terminal 16 is constituted of a metal. The positive electrode terminal 16 is insulated from the case 11 through a positive electrode gasket 24 constituted of an insulating material. The positive electrode terminal 16 has a first terminal portion 16a exposed to the outside of the case 11 and a second terminal portion 16b riveted to the first terminal portion 16a. The first terminal portion 16a and the second terminal portion 16b may be welded (e.g., laser welded) further. The above-described positive electrode tabs 15 are connected to the second terminal portion 16b, for example, by ultrasonic welding. Accordingly, the positive electrode terminal 16 is electrically connected to the positive electrode 14a. An insulating plate 23 for electrically insulating the positive electrode terminal 16 and the electrode group 14 is provided between the two. The positive electrode terminal 16 is an example of the conductive member.

The insulating plate 23 includes a protrusion 23a that is provided opposite the innermost peripheral area of the electrode group 14 (in this example, an area that includes innermost M turns of the electrode group 14 (M is an integer of 6 or more and 9 or less) and that protrudes toward the electrode group 14 (downward in FIG. 1). The protrusion 23a is tapered in a direction away from the positive electrode terminal 16 toward the inner periphery of the electrode group 14.

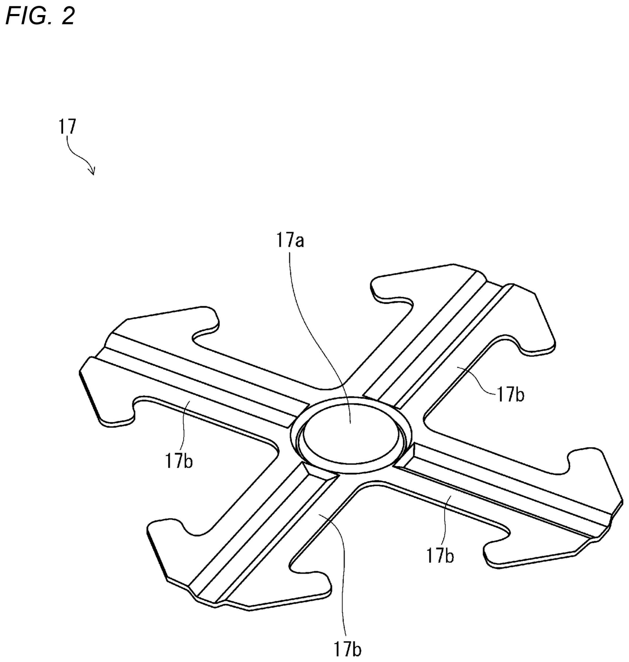

The end surface current collector plate 17 is constituted of a metal and has a central portion 17a and a plurality of (in this case, four) arm portions 17b extending radially outward from the central portion 17a, as illustrated particularly in FIG. 2. The end surface current collector plate 17 is substantially cross shaped as a whole but is not limited thereto. Each arm portion 17b is connected to the negative electrode 14b of the electrode group 14, for example, by laser welding. The end surface current collector plate 17 is an example of the first current collector plate.

Here, an end portion E (hereinafter, also referred to as first end portion E) of the negative electrode current collector extending in the longitudinal direction thereof protrudes from the other end surface (lower end surface in FIG. 1) of the electrode group 14. The arm portions 17b are welded to parts of the first end portion E but are not welded to a region of the first end portion E corresponding to inner N turns (N is an integer of 2 or more and 8 or less, preferably an integer of 3 or more and 4 or less).

The negative electrode current collector plate 19 is electrically connected to the end surface current collector plate 17 via a metal-made connection plate 18 (which can be formed in a ring-like shape, for example). Accordingly, the negative electrode current collector plate 19 is electrically connected to the negative electrode 14b. The negative electrode current collector plate 19 and the connection plate 18 may be welded (e.g., laser welded) to each other. The connection plate 18 and the end surface current collector plate 17 may be welded (e.g., laser welded) to each other. The negative electrode current collector plate 19 may be directly connected to the end surface current collector plate 17. In this case, the connection plate 18 is not necessary. The negative electrode current collector plate 19 has one or more injection holes 19a through which the liquid electrolyte is to be injected into the case 11. The negative electrode current collector plate 19 is welded (e.g., laser welded) at the outer periphery thereof to the recess 13 of the case 11. Accordingly, the case 11 is electrically connected to the negative electrode 14b via the negative electrode current collector plate 19 and the like.

The sealing plate 21 seals the opening of the case 11. The sealing plate 21 is constituted of a metal and is substantially disc-shaped. The sealing plate 21 is insulated from the case 11 through a negative electrode gasket 25. The sealing plate 21 in the present embodiment is electrically connected to neither the positive electrode 14a nor the negative electrode 14b of electrode group 14 but is not limited thereto. The sealing plate 21 includes an explosion-proof mechanism (not illustrated) that is activated upon the internal pressure of the case 11 exceeding a predetermined value. The sealing plate 21 has an outer peripheral portion 21a that is crimped to and fixed by the case 11, and an inner portion 21b that is located closer to the center than the outer peripheral portion 21a. Between the outer peripheral portion 21a and the inner portion 21b, a step portion 21c is formed so that the inner portion 21b is positioned further outward (lower side in FIG. 1) from the case 11 relative to the outer peripheral portion 21a.

### <<Supplemental Remarks>>

According to the above description of the embodiments, the following techniques are disclosed.

### (Technique 1)

A secondary battery including:
a first electrode including a first current collector having an elongated sheet shape;
a second electrode including a second current collector having an elongated sheet shape;
a separator provided between the first electrode and the second electrode; and
a first current collector plate welded to the first electrode,
wherein the first electrode and the second electrode are wound for 9 or more turns with the separator therebetween to constitute an electrode group,
an end portion of the first current collector extending in a longitudinal direction thereof protrudes from one of end surfaces of the electrode group, and
a part of the end portion is welded to the first current collector plate, while a region of the end portion that corresponds to inner N turns is not welded to the first current collector plate, where N is an integer of 2 or more and 8 or less.

### (Technique 2)

The secondary battery according to Technique 1, wherein a region of the end portion of the first electrode that corresponds to inner N turns is not welded to the first current collector plate, where N is an integer of 3 or more and 4 or less.

### (Technique 3)

The secondary battery according to Technique 1 or 2, wherein in the electrode group, the first electrode and the second electrode are wound for 30 or more turns with the separator therebetween.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted to cover all alterations and modifications as fall within the true spirit and scope of the invention.

### [Industrial Applicability]

The present disclosure can be utilized for secondary batteries.

### [Reference Signs List]

10: secondary battery
   11: case
      12: through hole
      13: recess
   14: electrode group
      14a: positive electrode (second electrode)
      14b: negative electrode (first electrode)
   15: positive electrode tab (tab)
   16: positive electrode terminal (conductive member)
      16a: first terminal portion
      16b: second terminal portion
   17: end surface current collector plate (first current collector plate)
      17a: central portion
      17b: arm portion
   18: connection plate
   19: negative electrode current collector plate
      19a: injection hole
   21: sealing plate
      21a: outer peripheral portion
      21b: inner portion
      21c: step portion
   22: insulation member
   23: insulating plate
      23a: protrusion
   24: positive electrode gasket
   25: negative electrode gasket
E: first end portion

## Claims

1. A secondary battery comprising:
a first electrode including a first current collector having an elongated sheet shape;
a second electrode including a second current collector having an elongated sheet shape;
a separator provided between the first electrode and the second electrode; and
a first current collector plate welded to the first electrode,
wherein the first electrode and the second electrode are wound for 9 or more turns with the separator therebetween to constitute an electrode group,
an end portion of the first current collector extending in a longitudinal direction thereof protrudes from one of end surfaces of the electrode group, and
a part of the end portion is welded to the first current collector plate, while a region of the end portion that corresponds to inner N turns is not welded to the first current collector plate, where N is an integer of 2 or more and 8 or less.

2. The secondary battery according to claim 1,
wherein a region of the end portion of the first electrode that corresponds to inner N turns is not welded to the first current collector plate, where N is an integer of 3 or more and 4 or less.

3. The secondary battery according to claim 1 or 2,
wherein in the electrode group, the first electrode and the second electrode are wound for 30 or more turns with the separator therebetween.
